# EUROPEAN PATENT SPECIFICATION

(11) **EP 0 991 239 B1**
(45) Date of publication and mention of the grant of the patent: **14.01.2009**
(21) Application number: 99307679.3
(22) Date of filing: 29.09.1999
(51) Int. Cl.: H04L 27/26, H04L 25/06, H04L 27/38

(54) **Setting of quantisation levels in multicarrier receivers**
Einstellung von Quantisierungspegeln in Mehrträgerempfängern
Etablissement de seuils de quantification dans des récepteurs multiporteurs

(30) Priority: 01.10.1998 GB 9821385
(43) Date of publication of application: 05.04.2000
(73) Proprietor: BRITISH BROADCASTING CORPORATION, London W1A 1AA (GB)
(72) Inventor: Stott, Jonathan Highton, Surrey, KT20 6 NP (GB); Robinson, Adrian Paul, Surrey, KT20 6NP (GB); Haffenden, Oliver Paul, Surrey, KT20 6NP (GB); Clarke, Christopher Keith Perry, Surrey, KT20 6NP (GB); Mitchell, Justin David, Surrey, KT20 6NP (GB)
(74) Representative: Abnett, Richard Charles

(56) References cited:
- EP-A- 0 328 266
- EP-A- 0 677 937
- WO-A-97/13378
- US-A- 5 274 674

## Description

### Background of the Invention

This invention relates to a method and apparatus for determining channel state information from an OFDM (orthogonal frequency-division multiplex) signal received over a channel, and for determining values encoded as a received OFDM signal, the values being selected from a plurality of possible values.

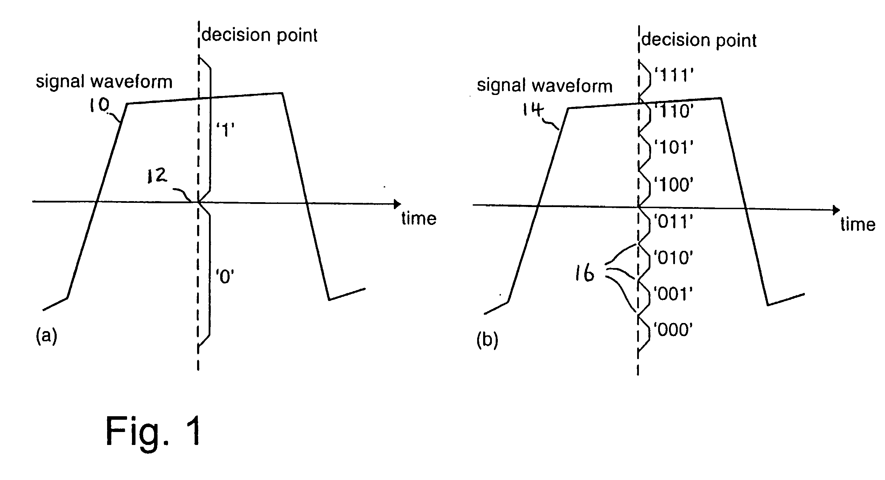

Referring to Figure 1 of the drawings, a slicer may be used to determine whether a received continuous signal represents a one (1) or a zero (0) by comparing its instantaneous value with a threshold value, as shown at (a) in Figure 1. The signal waveform 10 is compared with a threshold 12, which may be zero for example, and if the signal level is above the threshold the value represented by the signal at that moment it is assumed to be one, and if the signal level is below the threshold the value represented by the signal at that moment it is assumed to be zero. This is known as a 'hard' decision process.

The performance of the system, in terms of the number of possible values transmitted at each instant, can be improved by using so-called 'soft' decisions in the slicer. This is illustrated at (b) in Figure 1. It involves making the slicer more complex. Here, the signal waveform 14 is compared with a plurality of different thresholds or decision levels 16. In the example shown at (b) in Figure 1, eight different levels represented by three binary bits can be discriminated by comparing the signal waveform with seven equi-spaced thresholds. The resultant signal values are allocated the values 000, 001, 010, 011, 100, 101, 110, and 111 respectively. Compared with the 'hard' decision obtained as at (a), the 'soft' decision obtained as in (b) allows the degree of confidence that can be placed in individual decisions to be encoded. This confidence level can then be used in the subsequent signal processing. More particularly, if the subsequent circuits incorporate a Viterbi decoder, the Viterbi decoder can evaluate totals based in part on the distance properties of the code and in part on the confidence values from individual soft decisions.

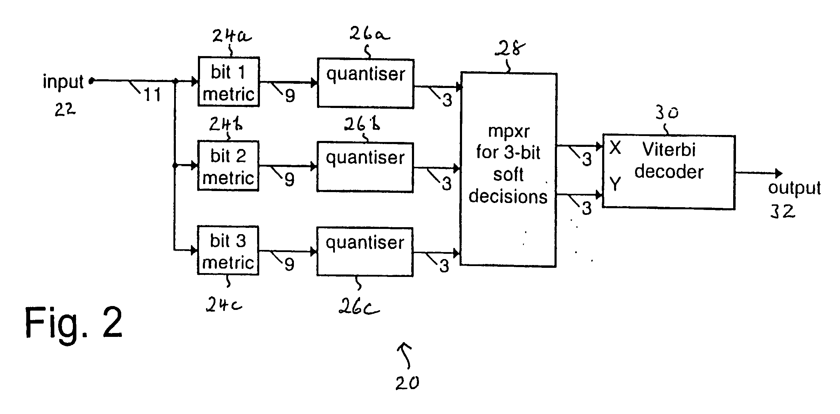

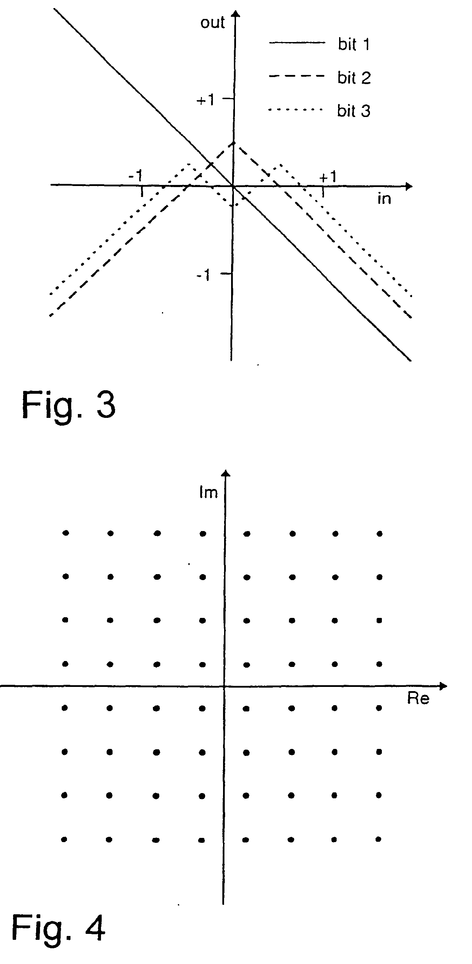

Figure 2 of the drawings shows a known decoding circuit 20 incorporating a Viterbi decoder which makes use of 64-QAM, that is Quadrature Amplitude Modulation with 64 possible positions on an amplitude-phase diagram, see Figure 4 described below. Such a circuit will be used in a digital broadcast receiver, for example, and may be used with COFDM (coded OFDM) signals. In Figure 2, the numbers against certain of the connections indicate the word lengths used at that point in the system. In the decoding circuit 20 of Figure 2, an 11-bit input signal is received at an input 22 and is applied to three metering circuits 24a, 24b, and 24c, which are referred to respectively as the bit 1 metric circuit, the bit 2 metric circuit, and the bit 3 metric circuit. The 9-bit output of each circuit 24 is connected to a respective quantiser 26, which provides a 3-bit output. The three 3-bit outputs are applied to a multiplexer 28 for the 3-bit soft decisions, which produces two 3-bit outputs to inputs X and Y respectively of a Viterbi decoder 30. The Viterbi decoder 30 provides the output 32 of the decoding circuit 20.

Thus, before the 3-bit quantisation in the quantisers 26, the input signal received at input 22 is processed in the metric circuits 24 by a set of metric or metering characteristics, which provide a measure of how far and in what sense the signal departs from the decision level for each bit. The three metric characteristics used to prepare the individual (Gray-coded) bit signals for quantisation in the 64-QAM system can be shown to be as illustrated in Figure 3 of the drawings. This Figure shows a transfer characteristic from signal in to signal out for the three respective metric circuits. The characteristics are implemented in practice by inverting the input and adding an offset over the different parts of the signal range.

The resulting signals are individually quantised in quantisers 26 to produce, as shown in Figure 2, three-bit soft decisions. These are then multiplexed in multiplexer 28 appropriately for the convolutional code being used for presentation to the X and Y inputs of the Viterbi decoder 30, in known manner.

As noted above, such an arrangement may for example be used with Coded Orthogonal Frequency Division Multiplexing (COFDM), which is proposed for use in Digital Audio (or Sound) Broadcasting and in Digital Video Broadcasting. In particular, COFDM is to be used in the DVB-T system (Digital Video Broadcasting - Terrestrial), as described in ETSI document ETS 300 744 (1997): "Digital broadcasting systems for television data services; framing structure, channel coding and modulation for digital terrestrial television".

COFDM is a multi-carrier system in which the individual carriers can be treated as separate transmission channels. We have appreciated that soft decisions can advantageously be derived and applied separately for all the individual data carriers in an OFDM signal. The performance of the individual channels can then be determined to give what may be termed channel state information, which is a measure of the effectiveness of the transmission process at each carrier frequency, for each channel.

In the proposed DVB-T system, there are several thousand carriers, extending across most of the width (in bandwidth terms) of a television channel, which is usually of width 6MHz, 7MHz, or 8MHz. Many factors, such as multipath propagation, in which the different paths reinforce or tend to cancel the frequencies of individual carriers, result in variations in the strength of the signals from one carrier relative to another. The receiver noise characteristics, on the other hand, will be relatively constant across the band of carriers. Thus the received signal-to-noise ratio will vary for different carriers with the result that weak signals will be much more likely to give errors than strong signals. In the DVB-T system, the strength of the individual carriers is estimated by interpolation in frequency and time from a pattern of pilot carriers, known as "scattered pilots", as part of the amplitude and phase correction process required for the method of synchronous demodulation used. This can be used to provide an estimate of the signal-to-noise ratio for each carrier.

In the context of other COFDM systems and in early versions of the DVB-T system, a "null" symbol with no modulation on most of the carriers was included, primarily for synchronisation purposes. However, a second use of the null symbol was for the measurement of noise and interference at each of the unused frequencies.

These channel state measurement methods could in principle be used to determine which carriers were likely to produce unreliable data and this information could be included in the Viterbi decoding process by signalling "erasures" to the decoder causing it to ignore those values, in a similar way to the decoder ignoring redundant or "punctured" values used to change the code rate of a more basic code system. This has been considered in outline in a paper by Stott, J.H., published in the Proceedings of the 20th International Television Symposium, Montreux, 1997, pages 341-350, see especially Section 5.3.

Reference may be made to International Patent Application WO97/13378 which describes obtaining channel state information from QPSK modulated symbols, which involves rotation of the signal and is specific to QPSK signals. United States Patent US-A-5,636,253 (equivalent to EP 677937) describes a method of detecting erasures in a multicarrier data transmission system, and more particularly provides a criterion for deciding whether impulse noise or Gaussian noise is present. For each received symbol the nearest of the QAM points is selected and the difference from it calculated. This difference is multiplied with a weighting factor and then summed for all the carriers to give an average value. European Patent Application EP 328266 describes a binary data regenerator with three threshold levels, the middle one of which is adaptively derived from and lies between the other two so that it is an optimum level for producing a regenerated output. Two control loops are used to produce the other two threshold levels, such that the bit error rates produced by reference to the first and third thresholds are the same. United States Patent US-A-5,274,674 controls a threshold decoder for a signal having several levels and affected by echoes. The threshold value is incremented in dependence upon the binary error rate, and the direction of incrementation is then reversed when the error rate exceeds a stored value for the first time, and stopped when it exceeds it for the second time. The average of these two threshold values is then chosen and used.

United States Patent US-A-5,687,164 describes the use of a Viterbi decoder to decode a QAM signal. International Patent Application WO92/22162 describes a QAM system in which the constellation is modified in accordance with channel quality. United States Patent US-A-5,134,635 describes a convolutional decoder which assigns bit metrics to at least one bit of a symbol, and uses soft-decision Viterbi decoding with channel state information. United States Patent US-A-4,630,305 describes a noise suppression system for use with high ambient noise which estimates channel energy and controls channel gain in dependence thereon.

### Summary of the Invention

The invention in its various aspects is defined in the independent claims below, to which reference should now be made. Advantageous features are set forth in the appendant claims.

A preferred embodiment of the invention is described in detail below with reference to the drawings. In this embodiment, a measurement of channel state is obtained for each carrier of a COFDM signal and is used to vary the discrimination levels of a soft-decision quantiser which feeds a Viterbi decoder. The channel state information is obtained from the 64-QAM signal by quantising the input with a hard-decision quantiser and obtaining the difference between the quantised and unquantised signal. The channel state information is applied through a symbol-delay recursive filter to a control circuit. The output of the control circuit directly controls the soft-decision quantisers by varying their discrimination levels. The control circuit includes a logarithm circuit and a multiply-by-two circuit. The method is applicable to receivers for digital audio broadcasting (DAB) or digital video broadcasting (DVB-T) signals.

The adjustment of the discrimination levels of the soft-decision decoder is one way of adjusting the amplitudes of the discrimination levels used in the soft-decision quantiser relative to the received values as received at the input.

### Brief Description of the Drawings

The invention will now be described in more detail, by way of example, with reference to the accompanying drawings in which:
**Figure 1** is a waveform diagram illustrating the difference between hard and soft decoding decisions;
**Figure 2** is a block circuit diagram illustrating a decoder circuit for 3-bit soft-decision decoding of a 64-QAM (quadrature amplitude modulated) signal using a Viterbi decoder;
**Figure 3** shows transfer characteristics of metric circuits used in the decoder of Figure 2;
**Figure 4** is a phase diagram showing the constellation of 64 possible code value positions used in 64-QAM;
**Figure 5** is a block circuit diagram of a circuit for providing a measurement of channel state, or channel state information (CSI);
**Figure 6** is a block circuit diagram of a recursive low-pass filter which incorporates a full symbol delay, used for averaging carrier error values;
**Figure 7** is a block circuit diagram of a circuit for generating a control signal based on the channel state information;
**Figure 8** is a block circuit diagram of a circuit for applying a correction on the basis of the channel state information to a decoder circuit of the type shown in Figure 2; and
**Figure 9** shows an improvement to the filter of Figure 6.

### Detailed Description of the Preferred Embodiment

A preferred embodiment of the invention in which the channel state or condition is measured and a correction applied will now be described with reference to the drawings. The system will be described here in terms of 64-QAM, and with reference to OFDM signals. The descrambler system is based on the use of convolutional encoding and Viterbi decoding, in itself well-known, in which the decoder evaluates the code distance properties over a sequence of received signals and selects the most probable form of the sequence.

In the DVB-T system, which uses OFDM, after all the synchronisation and equalisation processes have been carried out, the complex carrier modulation signals appear at specified levels and phases, forming the well-known constellation display of Quadrature Amplitude Modulation data, such as the phase/amplitude points for 64-QAM shown in Figure 4.

In practice, however, the received constellation values do not always fall exactly on the nominal constellation points shown, but because of noise, distortion and interference, form a cloud of values in the vicinity of each point. As described below, in the embodiment illustrated, channel state information (CSI) is measured by determining how much the received values depart, on average, from the nominal positions. Clearly, when the signal values are very noisy or distorted, some values may fall closer to a nominal data position which is not the correct one, so that these values will not contribute accurately to the channel state measurement. However, values falling outside the constellation can contribute useful indications of channel state for higher values than half the distance between nominal points.

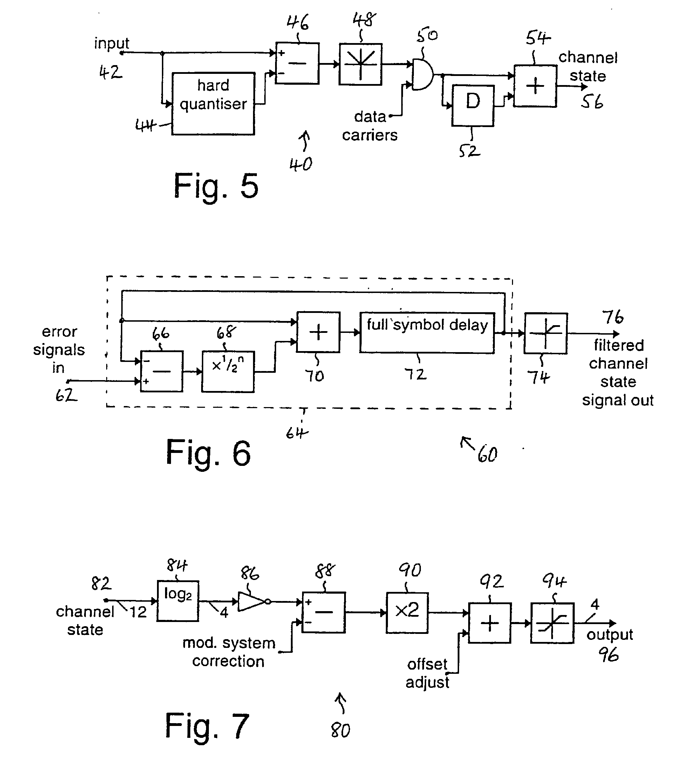

Figure 5 shows a circuit 40 which can be used for channel state measurement. The circuit 40 has an input 42 for receiving an input signal, which for convenience comprises time-multiplexed real and imaginary (in-phase and out-of-phase) carrier components for successive carriers. That is, the real and imaginary components for each carrier are multiplexed, and the resultant multiplexes for the carriers are themselves multiplexed. During any one symbol period all the carriers are processed. The input signal is applied to a 'hard' quantiser 44 and to the non-inverting input of a subtracter 46. The output of the quantiser 44 is connected to the inverting or subtractive input of the subtracter 46. The output of the subtracter is then connected through a rectifier or modulus circuit 48, which inverts negative values, to one input of a two-input AND-gate 50. The other input of the AND-gate 50 receives a flag indicating whether the carrier is a pilot of the DVB-T system, that is one the scattered pilots referred to above. Operation is suppressed for such pilot carriers. The output of the AND-gate 50 is applied both directly and through a delay 52 to an adding circuit 54, the output 56 of which forms the output of the channel state measurement circuit. The delay 52 demultiplexes the real and imaginary values for each carrier, and the adder 54 adds the real and imaginary parts of the signal value. In a COFDM system, the circuit shown in Figure 5 produces an output during a particular time period for each of the carriers the condition of which is to be monitored.

The method used in the equipment shown in Figure 5 to calculate the channel state consists, for each carrier, of first determining in the quantiser 44 the nearest nominal level for each component of the complex input signal, and then subtracting the thus-determined nearest nominal level from the component of the complex input signal itself. This gives a measure of the deviation from the correct value, as introduced by the transmission channel. As noted, at this point the signal for each carrier is carried for convenience as time-multiplexed real and imaginary components. The process of subtracting the nearest nominal level is simplified considerably by arranging that the nominal constellation positions are aligned with transitions of the major bits of the binary-encoded words used to represent the real and imaginary components. The resulting difference signals from the subtracter 46 are rectified in the rectifier 48 to produce positive-going signals, and the contributions of the pilot carriers of the DVB-T system are suppressed by the AND-gate 50, as noted above. The real and imaginary values for each carrier are then demultiplexed by the delay 52 and are added together by the adder 54, to provide an approximation to the error magnitude for that carrier.

While the exact length of the error vector could be measured by evaluating the root-sum-of-squares of the real and imaginary errors, this is unnecessarily accurate and using the sum of the real and imaginary errors provides a useful reduction in complexity.

While the measurement system is reasonably accurate for small errors, accuracy tends to reduce for more impaired signals. This is because the channel state error has been measured from the nearest constellation points rather than the true constellation point for each carrier value. Thus large errors falling within the constellation show up as smaller errors from another nominal position, so the technique tends to provide an underestimate of the impairment.

Some benefit may be obtained by compensating for this by inserting a circuit with a non-linear characteristic after the rectifier 48 in Figure 5. Assuming the impairment to be Gaussian noise, the precise form of the underestimate can be calculated, so that a 'perfect' linearising characteristic could be synthesised by a look-up table. However, a piecewise-linear characteristic, in which the gain is unity for amplitudes up to half the spacing between constellation points and increases to two or three times above this value could provide an approximation to the ideal law. Alternatively, an empirical control law, see below, may compensate for the underestimate.

Figure 6 illustrates a symbol-recursive filter 60 for averaging the carrier error values as determined by the circuit of Figure 5. The filter 60 is connected to the output of the circuit of Figure 5 and receives at an input 62 the measured channel state error values. These values are applied to a symbol delay filter 64 and more particularly to the non-inverting input of a subtracter 66 in the filter. The output of the subtracter is applied to a circuit 68 capable of dividing by a power of 2, denoted 2ⁿ, and the output of circuit 68 is applied to one input of an adder 70. The output of adder 70 is applied to a full symbol delay 72 which delays the signal by one complete symbol period of the COFDM signal. The delayed signal from the delay 72 is then applied to the inverting input of the subtracter 66, to the other input of the adder 70, and finally to a limiting circuit 74 connected to the output of the filter 64, the output 76 of which constitutes the output of the filter 60.

The measured channel state values are thus filtered with a recursive low-pass filter incorporating a full symbol period delay, so that successive error values from each carrier position are averaged together.

Setting the value of n=2 is found to provide an appropriate degree of averaging, although other values can be used. The signal is clipped in circuit 74 to remove any negative values (caused by quantising errors) and to limit the range of positive values, before being passed to the quantiser selection process.

The channel state information could be used simply to reject unusable carriers. However, performance can be further improved by modifying the soft-decision values according to the level of impairment signalled by the channel state measurement. A control law can be developed by a combination of theory and practical optimisation to relate the modified soft decisions to the channel state values.

This is illustrated in Figure 7, which shows a circuit 80 which implements a control law. The circuit 80 has an input 82 for receiving the output of Figure 6 which is applied to a logarithm circuit 84 which takes the logarithm of the input value to base two. The output of the circuit 84 is applied through an inverter 86 to the non-inverting input of a subtracter 88. The inverting input of the subtracter receives a correction signal which is dependent upon the particular type of modulation system being used. The output of the subtracter 88 is multiplied by two in a multiplier 90, the output of which is applied to one input of a two-input adder 92 which also receives an offset adjustment. The output of the adder 92 is applied to a limiter or clipper 94, the output 96 of which constitutes the output of the circuit 80.

The circuit 80 operates by first taking the base-two logarithm of the channel state signal in the logarithm circuit 84. Next, the log signal is bit-wise inverted by inverter 86, so that a large value now represents a good-quality signal. A shift is then subtracted in subtracter 88 to take account of the different channel state sensitivities of different modulation systems. This occurs because of the differing spacing between points in the constellation for systems other than 64-QAM (Figure 4). Because of the logarithm, the shift gives the effect of dividing the channel state measurement by a factor. The resulting signal is multiplied by two in multiplier 90 to give the effect of using the square of the channel state measurement. This converts the voltage carrier to noise measurement into a power carrier to noise measurement. An adjustable offset, optimised empirically by measurement, is then added in adder 92 and the result clipped in clipper 94 to take account of the range of control available for modifying the soft decisions.

The use of the logarithm circuit 84, which, notably, is not followed by any antilogarithm circuit, might be thought to distort the processing, but in fact is found to lead to more efficient processing. The logarithm operation does not need to be conducted with high accuracy; a very low-grade logarithm using only one binary digit for the mantissa can be employed.

While the technique of signalling erasures directly to the Viterbi decoder could have been used, we have found that greater improvements can be gained by altering the effective discrimination levels for the soft decisions according to the measured channel state. Direct alteration of the 3-bit decisions in Figure 2 is inappropriate, however, because much of the control is lost due to the coarse quantisation. Instead it would be more successful to introduce multipliers between the metrics 24 and the quantisers 26 in Figure 2 and to control the multiplication factor provided by these multipliers from the control law signals of Figure 7. Such multipliers could be viewed as partially undoing the equalisation process used to produce the standardised amplitudes presented to the metric characteristics, so that originally small (and therefore noisy) signals are once again made small for presentation to the soft-decision quantisers. Because the signals are small, the soft decisions would tend to favour the 011 and 100 values (Figure 1 at (b)), indicating uncertain values to the Viterbi decoder.

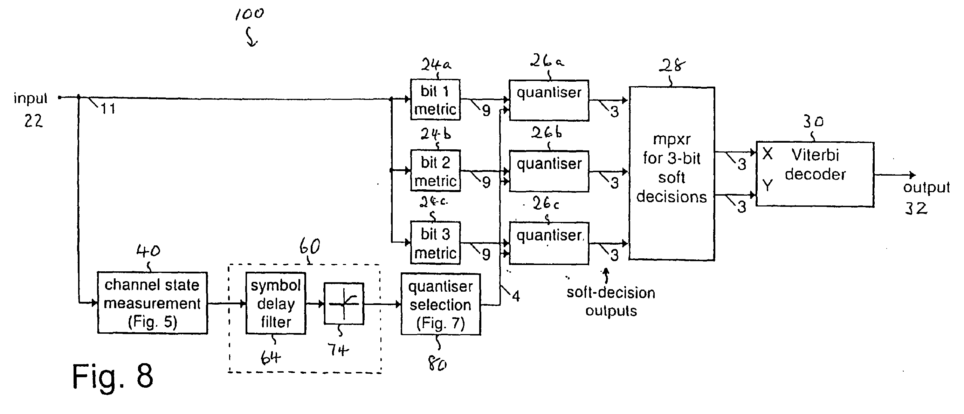

Because the introduction of three multipliers would represent a considerable increase in complexity, a simpler alternative method is proposed. This consists of altering the quantiser levels used to produce the soft decisions, as shown in Figure 8.

The circuit 100 illustrated in Figure 8 shows how the circuits of Figures 5 to 7 are used together in the circuit of Figure 2 to provide a system in which the channel state information is used in making the soft decisions in the decoder. In the circuit 100 corresponding reference numerals are used, where possible, to designate the same elements as in the earlier figures. The input signal received at input 22 is applied not only to the metering circuits 24 but also to a channel state measurement circuit 40 of the type shown in Figure 5. The output of this circuit is applied to the circuit 60 of Figure 6 including the symbol delay filter 64 and clipper 74, the output of which is applied to the circuit 80 of Figure 7. The output of the circuit 80 is then applied to the quantisers 26 which produce respective soft decision outputs. These are then applied to a multiplexer 28 and Viterbi decoder 30, as with the circuit of Figure 2.

The quantisers 26 provide ten different quantising laws selected by the 0 to 9 states of the 4-bit quantiser control signal, with state 9 representing the finest quantiser to be used for the highest quality signals. The quantiser laws are produced approximately at gain steps of √2, so that the upper three bits of the control signal select five levels of bit shift and clip the signals at the extremes of each range to produce a 5-bit signal. The soft decision value is then produced using the levels 12, 8, 4, 0, -4, -8 and -12 for unity gain values, or levels 9, 6, 3, 0, -3, -6 and -9 to approximate for ¹/_{√2} gain values. Thus for a carrier signal of very low quality, either originally small (and therefore noisy) or obscured by interference, the quantisation levels are spread over a wide range so that the standardised signal levels will tend to fall in the 011 and 100 states, indicating low confidence in the values from this carrier to the Viterbi decoder.

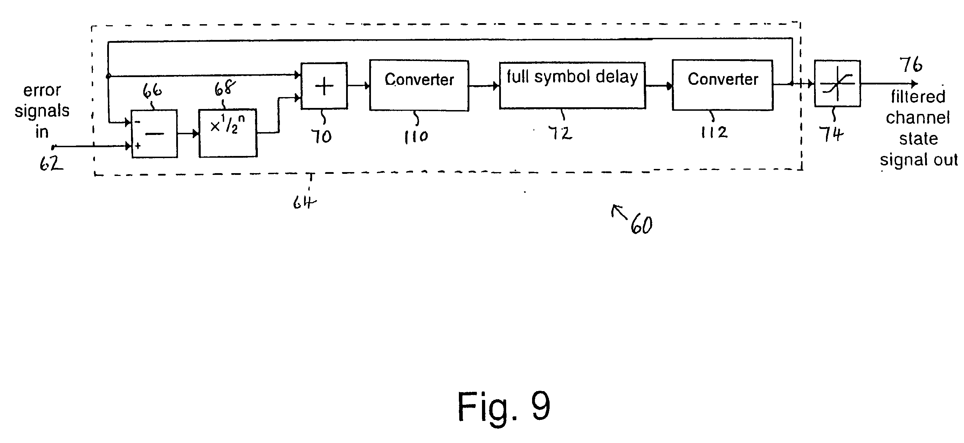

Figure 9 illustrates an improved form of the filter of Figure 6, which includes two additional converter circuits 110 and 112. The converter 110 is a fixed to floating point converter and is located between the adder 70 and the delay 72. The converter 110 converts a 12-bit input into an 8-bit floating point output, with 5 bits for the characteristic and 3 for the mantissa. The converter 112, at the output of the delay, reverses this operation. Such an arrangement reduces the storage requirements in the delay and is found in fact, surprisingly, to work better than the circuit of Figure 6.

It will be appreciated that many modifications may be made to the circuits described and illustrated, and that the invention in its various aspects is applicable to arrangements other than those illustrated. In particular, the invention has been described in relation to 64-QAM, but it could be applied to other QAM schemes, including those in which the constellation points are irregularly spaced.

## Claims

1. Apparatus for determining values encoded by a received signal, the values being selected from a plurality of possible values, the apparatus comprising:
an input (22) for receiving a signal representing a sequence of values;
soft-decision quantising means (26) coupled to the input for comparing the received values with a plurality of soft-decision discrimination levels to determine at any moment the values from a plurality of possible values which are nearest to the values indicated by the received signal;
channel state determining means (40) coupled to the input for generating from the received signal a measure of channel condition; and
adjusting means (80) coupled to the output of the channel state determining means for providing a control signal for adjusting the amplitudes of the discrimination levels used in the quantising means relative to the received values as received at the input in dependence upon the channel condition as measured by the channel state determining means.

2. Apparatus according to claim 1, further including multiplier means connected between the input and the soft-decision quantising means (26), and in which the control signal from the adjusting means (80) is connected to the multiplying means to control the multiplication factor thereof.

3. Apparatus according to claim 1, in which the control signal from the adjusting means (80) is connected directly to the soft-decision quantising means (26) to vary the discrimination levels of the soft-decision quantiser.

4. Apparatus according to claim 1, in which the channel state determining means comprises:
quantising means (44) coupled to the input for determining at any moment the phase/amplitude points from a plurality of possible phase/amplitude points which are nearest to each of the points represented by each carrier in each symbol period;
differencing means (46,48) coupled to the input and to the quantising means for determining the modulus of the differences between the points represented by each carrier in each symbol period and the corresponding nearest points of the plurality of possible phase/amplitude points; and
accumulating means (52,54) coupled to the differencing means for accumulating the differences for each carrier to provide an output indicating channel state for each of the many carriers.

5. Apparatus according to claim 1, in which the channel state determining means includes a recursive filter (64).

6. Apparatus according to claim 5, in which the recursive filter includes a symbol delay, and two converters in a recursive loop; the first converter (110) being a fixed to floating point converter located before the input to the delay and the second converter (112) being a floating to fixed point converter located after the output of the delay.

7. Apparatus according to claim 1, in which the adjusting means comprises a logarithm circuit (84).

8. Apparatus according to claim 1, in which the adjusting means comprises means (84,88) for dividing the channel state signal by a predetermined factor.

9. Apparatus according to claim 1, in which the adjusting means comprises means (90) for taking the square of the signal.

10. A method of determining values encoded by a received signal, the values being selected from a plurality of possible values, the method comprising the steps of:
receiving a signal representing a sequence of values;
comparing the received values with a plurality of soft-decision discrimination levels to determine at any moment the values from a plurality of possible values which are nearest to the values indicated by the received signal;
generating from the received signal a measure of channel condition; and
adjusting the amplitudes of the discrimination levels used in the quantising means relative to the received values as received at the input in dependence upon the measured channel condition.

11. A method according to claim 10, in which the received signal is an OFDM signal.

## Patentansprüche

1. Vorrichtung zum Ermitteln von durch ein empfangenes Signal codierten Werten, wobei die Werte aus einer Mehrzahl von möglichen Werten ausgewählt werden, wobei die Vorrichtung Folgendes umfasst:
einen Eingang (22) zum Empfangen eines Signals, das eine Folge von Werten repräsentiert;
ein Softentscheidungsquantisierungsmittel (26), das mit dem Eingang gekoppelt ist, um die empfangenen Werte mit mehreren Softentscheidungsunterscheidungspegeln zu vergleichen, um in jedem Moment die Werte aus einer Mehrzahl von möglichen Werten zu bestimmen, die den von dem empfangenen Signal angezeigten Werten am nächsten liegen;
ein Kanalzustandsermittlungsmittel (40), das mit dem Eingang gekoppelt ist, um von dem empfangenen Signal ein Maß für den Kanalzustand zu erzeugen; und
ein mit dem Ausgang des Kanalzustandsermittlungsmittels gekoppeltes Justiermittel (80) zum Erzeugen eines Steuersignals zum Justieren der Amplituden der in dem Quantisierungsmittel verwendeten Unterscheidungspegel relativ zu den empfangenen Werten, empfangen am Eingang in Abhängigkeit von dem vom Kanalzustandsermittlungsmittel gemessenen Kanalzustand.

2. Vorrichtung nach Anspruch 1, die ferner ein Multiplikationsmittel aufweist, das zwischen dem Eingang und dem Softentscheidungsquantisierungsmittel (26) geschaltet ist und in dem das Steuersignal von dem Justiermittel (80) mit dem Muliplikationsmittels verbunden ist, um dessen Multiplikationsfaktor zu regeln.

3. Vorrichtung nach Anspruch 1, in der das Steuersignal von dem Justiermittel (80) direkt mit dem Softentscheidungsquantisiermittel (26) verbunden ist, um die Unterscheidungspegel des Softentscheidungsquantisierers zu variieren.

4. Vorrichtung nach Anspruch 1, in der das Kanalzustandsermittlungsmittel Folgendes umfasst:
ein mit dem Eingang gekoppeltes Quantisierungsmittel (44), um in jedem Moment die Phasen-/Amplitudenpunkte aus einer Mehrzahl von möglichen Phasen-/Amplitudenpunkten zu bestimmen, die jedem der durch jeden Träger in jeder Symbolperiode repräsentierten Punkte am nächsten liegen;
ein mit dem Eingang und dem Quantisiermittel gekoppeltes Differenziermittel (46, 48), um das Modul der Differenzen zwischen den durch jeden Träger in jeder Symbolperiode repräsentierten Punkte und die entsprechenden nächstliegenden Punkte aus der Mehrzahl von möglichen Phasen-/Amplitudenpunkten zu bestimmen; und
ein mit dem Differenziermittel gekoppeltes Akkumulationsmittel (52, 54) zum Akkumulieren der Differenzen für jeden Träger, um einen Ausgang zu erzeugen, der den Kanalzustand für jeden der vielen Träger anzeigt.

5. Vorrichtung nach Anspruch 1, in der das Kanalzustandsermittlungsmittel ein Rekursivfilter (64) beinhaltet.

6. Vorrichtung nach Anspruch 5, in der das Rekursivfilter ein Symbolverzögerungsglied und zwei Konverter in einer Rekursivschleife aufweist; wobei der erste Konverter (110) ein Fest-in-Gleitpunktkonverter ist, der sich vor dem Eingang zu dem Verzögerungsglied befindet, und der zweite Konverter (112) ein Gleit-in-Festpunktkonverter ist, der sich hinter dem Ausgang des Verzögerungsgliedes befindet.

7. Vorrichtung nach Anspruch 1, in der das Justiermittel eine Logarithmusschaltung (84) umfasst.

8. Vorrichtung nach Anspruch 1, in der das Justiermittel Mittel (84, 88) zum Dividieren des Kanalzustandssignals durch einen vorbestimmten Faktor umfasst.

9. Vorrichtung nach Anspruch 1, in der das Justiermittel ein Mittel (90) umfasst, um das Quadrat des Signals zu nehmen.

10. Verfahren zum Ermitteln von durch ein empfangenes Signal codierten Werten, wobei die Werte aus einer Mehrzahl von möglichen Werten ausgewählt werden, wobei das Verfahren die folgenden Schritte beinhaltet:
Empfangen eines Signals, das eine Folge von Werten repräsentiert;
Vergleichen der empfangenen Werte mit mehreren Softentscheidungsunterscheidungspegeln, um in jedem Moment die Werte aus einer Mehrzahl von möglichen Werten zu bestimmen, die den von dem empfangenen Signal angezeigten Werten am nächsten liegen;
Erzeugen eines Maßes für den Kanalzustand von dem empfangenen Signal; und
Justieren der Amplituden der in dem Quantisierungsmittel verwendeten Unterscheidungspegel relativ zu den empfangenen Werten, empfangen am Eingang in Abhängigkeit von dem gemessenen Kanalzustand.

11. Verfahren nach Anspruch 10, wobei das empfangene Signal ein OFDM-Signal ist.

## Revendications

1. Appareil de détermination de valeurs codées par un signal reçu, les valeurs étant sélectionnées parmi une pluralité de valeurs possibles, l'appareil comprenant :
une entrée (22) pour recevoir un signal représentant une séquence de valeurs ;
un moyen de quantification à décision pondérée (26) couplé à l'entrée pour comparer les valeurs reçues à une pluralité de niveaux de discrimination de décision pondérée afin de déterminer à n'importe quel moment les valeurs parmi une pluralité de valeurs possibles qui sont les plus proches des valeurs indiquées par le signal reçu ;
un moyen de détermination d'état de canal (40) couplé à l'entrée pour générer à partir du signal reçu une mesure de condition de canal ; et
un moyen de réglage (80) couplé à la sortie du moyen de détermination d'état de canal pour fournir un signal de commande pour régler les amplitudes des niveaux de discrimination utilisés dans le moyen de quantification par rapport aux valeurs reçues telles que reçues à l'entrée en fonction de la condition de canal mesurée par le moyen de détermination d'état de canal.

2. Appareil selon la revendication 1, comportant en outre un moyen multiplicateur connecté entre l'entrée et le moyen de quantification à décision pondérée (26), et dans lequel le signal de commande provenant du moyen de réglage (80) est connecté au moyen multiplicateur afin d'en commander le facteur de multiplication.

3. Appareil selon la revendication 1, dans lequel le signal de commande provenant du moyen de réglage (80) est connecté directement au moyen de quantification à décision pondérée (26) afin de faire varier les niveaux de discrimination du quantificateur à décision pondérée.

4. Appareil selon la revendication 1, dans lequel le moyen de détermination de l'état de canal comprend :
un moyen de quantification (44) couplé à l'entrée pour déterminer à n'importe quel moment les points de phase/d'amplitude parmi une pluralité de points de phase/d'amplitude possibles qui sont les plus proches de chacun des points représentés par chaque porteuse dans chaque période de symbole ;
un moyen de différenciation (46, 48) couplé à l'entrée et au moyen de quantification pour déterminer le module des différences entre les points représentés par chaque porteuse dans chaque période de symbole et les points les plus proches correspondants de la pluralité de points de phase/d'amplitude possibles ; et
un moyen d'accumulation (52, 54) couplé au moyen de différenciation pour accumuler les différences de chaque porteuse afin de fournir une sortie indiquant un état de canal pour chacune des nombreuses porteuses.

5. Appareil selon la revendication 1, dans lequel le moyen de détermination d'état de canal comporte un filtre récursif (64).

6. Appareil selon la revendication 5, dans lequel le filtre récursif comporte un retard de symbole, et deux convertisseurs dans une boucle récursive ; le premier convertisseur (110) étant un convertisseur de virgule fixe en virgule flottante situé avant l'entée du circuit de retard et le second convertisseur (112) étant un convertisseur de virgule flottante en virgule fixe situé après la sortie du circuit de retard.

7. Appareil selon la revendication 1, dans lequel le moyen de réglage comprend un circuit logarithmique (84).

8. Appareil selon la revendication 1, dans lequel le moyen de réglage comporte un moyen (84, 88) pour diviser le signal d'état de canal par un facteur prédéterminé.

9. Appareil selon la revendication 1, dans lequel le moyen de réglage comprend un moyen (90) pour tirer la racine carrée du signal.

10. Procédé de détermination de valeurs codées par un signal reçu, les valeurs étant sélectionnées parmi une pluralité de valeurs possibles, le procédé comprenant les étapes consistant à :
recevoir un signal représentant une séquence de valeurs ;
comparer les valeurs reçues à une pluralité de niveaux de discrimination de décision pondérée afin de déterminer à n'importe quel moment les valeurs parmi une pluralité de valeurs possibles qui sont les plus proches des valeurs indiquées par le signal reçu ;
générer à partir du signal reçu une mesure de condition de canal ; et
régler les amplitudes des niveaux de discrimination utilisés dans le moyen de quantification par rapport aux valeurs reçues telles que reçues à l'entrée en fonction de la condition de canal mesurée.

11. Procédé selon la revendication 10, dans lequel le signal reçu est un signal multiplexé par répartition orthogonale de la fréquence (OFDM).
